# EUROPÄISCHE PATENTSCHRIFT

(11) **EP 1 600 660 B1**
(45) Veröffentlichungstag und Bekanntmachung des Hinweises auf die Patenterteilung: **11.02.2009**
(21) Anmeldenummer: 05010418.1
(22) Anmeldetag: 13.05.2005
(51) Int. Cl.: F16F 9/14

(54) **Drehschwingungsdämpfer**
Torsional vibration damper
Amortisseur de vibrations torsionelles

(30) Priorität: 27.05.2004 DE 102004026043
(43) Veröffentlichungstag der Anmeldung: 30.11.2005
(73) Patentinhaber: ZF Friedrichshafen AG, 88046 Friedrichshafen (DE)
(72) Erfinder: Förster, Andreas, 97422 Schweinfurt (DE)

(56) Entgegenhaltungen:
- US-A- 2 853 159
- US-A- 6 082 507
- US-A- 6 098 765
- US-A1- 2004 226 790

## Beschreibung

Die Erfindung betrifft einen Drehschwingungsdämpfer, insbesondere für ein Kraftfahrzeugfahrwerk gemäß dem Oberbegriff von Patentanspruch 1.

Die gattungsbildende DE 197 00 422 C2 beschreibt einen Drehschwingungsdämpfer, die die Merkmale des Oberbegriffs des Anspruchs 1 zeigt, umfassend einen mit Statorflügeln ausgestatteten Stator und einen flügelbesetzten Rotor, wobei der Stator und der Rotor mindestens zwei mit Dämpfmedium gefüllte Arbeitskammern bilden, die bei der Schwingungsbewegung wechselseitig ihr Volumen verändern, mindestens eine Dämpfeinrichtung, die mit mindestens einem der Arbeitsräume verbunden ist, wobei der mit der Dämpfeinrichtung verbundene Arbeitsraum mindestens eine Strömungsverbindung zu der Dämpfeinrichtung aufweist, wobei die Dämpfeinrichtung einen Sammelraum aufweist, der über die Strömungsverbindungen mit jeder Arbeitskammer verbunden und der Sammelraum zweigeteilt ist, wobei jeder der Sammelräume alle Arbeitskammern einer Drehrichtung verbindet und die beiden Einzelsammelräume durch eine Trennwand separiert sind, in der die Dämpfeinrichtung angeordnet ist, wobei mindestens einer der Sammelräume mit einem druckvorgespannten Ausgleichsraum in Wirkverbindung steht.

Bei dem Schwingungsdämpfer muss der Ausgleichsraum eine Druckvorspannung aufweisen, die derart bemessen ist, dass für eine Drehrichtung des Rotors der maximal erreichbare Dämpfdruck kleiner ist als die Druckvorspannung, da ansonsten der Trennkolben gegen das Gaspolster im Ausgleichsraum verdrängt würde. Folglich wählt man eine vergleichsweise große Druckvorspannung im Ausgleichsraum. Daraus resultiert ein insgesamt hohes Druckniveau innerhalb des Drehschwingungsdämpfers, wodurch zwischen dem Rotor und dem Stator erhöhte Reibungskräfte auftreten. In der DE 197 00 422 C2 wurde bereits darauf hingewiesen, dass der Sammelraum mit dem niedrigeren Druckniveau mit dem Ausgleichsraum in Wirkverbindung stehen soll.

Die US 2 853 159 beschreibt einen Schwingungsdämpfer mit einer Kolbenstange, die durch beide Enden eines Zylinder hindurch geführt ist, so dass die von einem Kolben auf der durchgehenden Kolbenstange getrennten Arbeitsräume bei einer Kolbenstangenbewegung im selben Maße gegensinnig ihr Volumen verändern. In einem achsparallelen Zylinder ist ein Ausgleichsraum angeordnet, wobei in einem Boden des achsparallelen Zylinders eine Anschlussöffnung zu einem Arbeitsraum und zum Ausgleichsraum besteht. Zwischen den beiden Anschlussöffnungen ist ein Rückschlagventil angeordnet, dass bei einem Unterdruck in den Arbeitsräumen gegen eine Federkraft öffnet. Bei einem Überdruck in den Arbeitsräumen kann Dämpfmedium durch einen Sinterkörper in den Ausgleichsraum fließen. Das Rückschlagventil soll temperaturabhängig Volumenströme zwischen dem Ausgleichsraum und einem Arbeitsraum zulassen.

Die Aufgabe der vorliegenden Erfindung besteht darin, dass man die Druckvorspannung im Ausgleichsraum im Vergleich zum Stand der Technik abzusenken kann.

Erfindungsgemäß wird die Aufgabe durch den Patentanspruch 1 gelöst.

Die Drosselstelle erzeugt ein Druckgefälle zwischen dem Sammelraum und dem Ausgleichsraum, so dass die Druckvorspannung im Ausgleichsraum im Vergleich zum Stand der Technik abgesenkt werden kann.

Für die konstruktive Ausgestaltung der Drosselstelle bestehen vielfältige Möglichkeiten. Der Ausgleichsraum dient vornehmlich dazu, temperaturbedingte Volumenänderungen des Dämpfmediums innerhalb des Drehschwingungsdämpfers auszugleichen. Die dabei auftretenden Volumen und vor allem Strömungsgeschwindigkeiten sind vergleichsweise klein. Deshalb übt die Drosselstelle tendenziell eine große Drosselwirkung bei größeren Durchflussgeschwindigkeiten aus. Beim Dämpferbetrieb treten im Vergleich zu dem temperaturbedingten Volumenstrom deutlich größere Strömungsgeschwindigkeiten auf. Bei einem entsprechend kleinen Drosselquerschnitt der Drosselstelle baut sich ein Staudruck auf, so dass praktisch kein Dämpfmedium von der Dämpfeinrichtung in den Ausgleichsraum übertritt.

In weiterer vorteilhafter Ausgestaltung ist die Drosselstelle richtungsabhängig wirksam. Beim Dämpferbetrieb erwärmt sich das Dämpfmedium. In der Anwendung in einem Fahrwerk wird der Drehschwingungsdämpfer vom Fahrtwind gekühlt. Sehr große und vor allem schnelle Abkühleffekte können bei Regen oder Schnee auftreten. Die Abkühlung kann schneller erfolgen als die Aufheizung beim Dämpferbetrieb. Deshalb ist die Drosselstelle richtungsabhängig wirksam.

Der Drosselstelle ist vorteilhafterweise ein Rückschlagventil parallel geschaltet, dass bei einer Anströmung aus dem Sammelraum geschlossen ist.

Gemäß einer besonders einfachen Ausführungsform wird die Drosselstelle von einem porösen Bauteil gebildet. Dabei hat sich ein poröses Bauteil aus einem Sinterwerkstoff als eine sehr einfache und kostengünstige Lösung herausgestellt. Alternativ kann auch eine Drosselstelle in der Bauform eines Kanals in Verbindung mit einer Abdeckscheibe ausgeführt sein, wobei zwischen der Abdeckscheibe und dem Kanal ein sehr exakt bestimmbarer Drosselquerschnitt wirksam werden kann.

In weiterer Ausgestaltung ist der Ausgleichsraum auf derselben Mittelachse wie der Sammelraum angeordnet.

Die Dämpfeinrichtung und die zweite Trennwand sind als Ringkolben ausgeführt und bilden über eine Tragstange eine Baueinheit. Diese Baueinheit kann unabhängig vom gesamten Drehschwingungsdämpfer vorgefertigt werden. Man kann auch vorsehen, dass der Ringkolben für die Dämpfeinrichtung als Bauteil identisch ist mit der zweiten Trennwand. Durch die Art der Bestückung der Strömungskanäle innerhalb der Ringkolben wird die gewünschte unterschiedliche Funktion der beiden Bauteile erreicht.

Anhand der folgenden Figurenbeschreibung soll die Erfindung näher erläutert werden.

Es zeigt:
- Fig. 1: Drehschwingungsdämpfer im Längsschnitt
- Fig. 2: Drehschwingungsdämpfer im Querschnitt

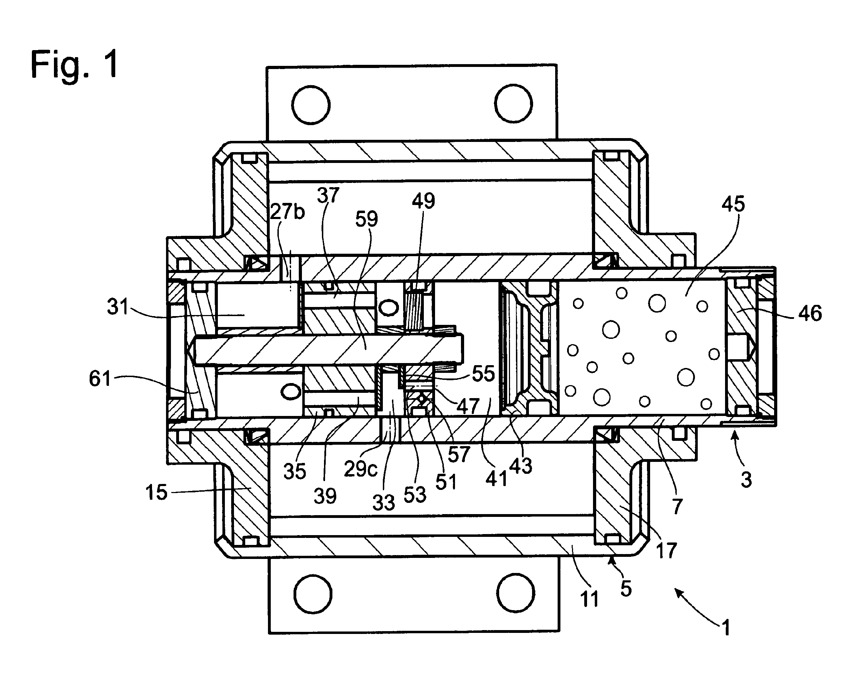

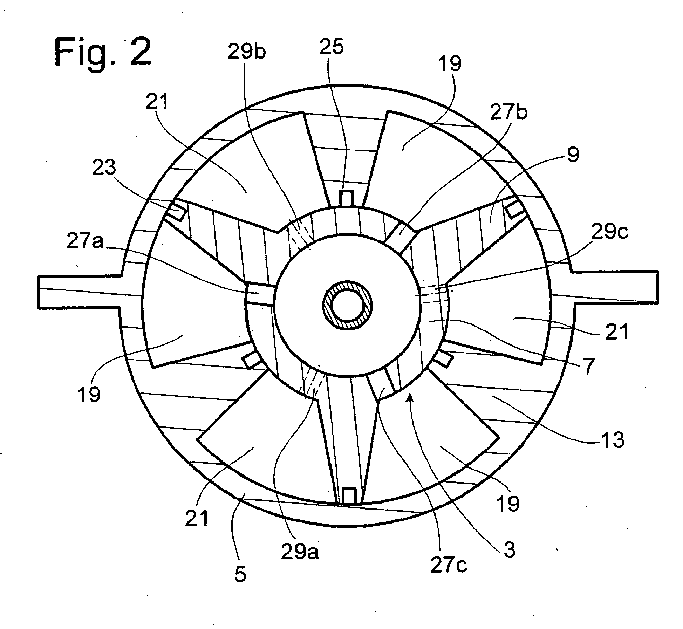

Die Figuren 1 und 2 beschreiben in der Zusammenschau einen Drehschwingungsdämpfer 1. Ein Rotor 3, der zu einem Stator 5 schwenkbar gelagert ist, verfügt über einen rohrförmigen Grundkörper 7, der in Axialrichtung verlaufende Flügel 9 aufweist. Der Stator 5 trägt an einer Innenwandung eines Zylinders 11 parallel zu den Flügeln verlaufende Rippen 13. Der Grundkörper 7 mit seinen Flügeln 9, der Zylinder 11 mit den Rippen 13 sowie endseitige Deckeln 15; 17 des Stators bilden Arbeitsräume 19; 21, wobei Arbeitsräume mit gleicher Bezugsziffer bei einer Schwenkbewegung des Rotor synchron ihr Volumen verändern. Die Deckel 15, 17 und der Zylinder 11 können durch einfaches Umbördeln der Zylinderränder zu einem Gehäuse verschlossen werden. Die benachbarten Arbeitsräume 19; 21 sind durch Dichtungen 23; 25 hydraulisch voneinander getrennt.

Arbeitsräume mit gleicher Bezugsziffer sind jeweils über Radialkanäle 27a, b, c und 29a; b; c an Sammelräume 31; 33 angeschlossen. Innerhalb des rohrförmigen Grundkörpers 7 zwischen den beiden Sammelräumen 31; 33 ist eine erste ortsfeste Trennwand 35 angeordnet, die als eine Dämpfeinrichtung mit Dämpfventilen 37; 39 für zwei Durchströmungsrichtungen ausgeführt ist. Das Volumen innerhalb der Arbeitsräume wird über die Dämpfeinrichtung umgepumpt. Für temperaturbedingte Volumenänderungen ist ein Ausgleichsraum 41 auf derselben Mittelachse in Reihe zum Sammelraum innerhalb des rohrförmigen Grundkörpers angeordnet. Der Ausgleichsraum ist vollständig mit einem Dämpfmedium gefüllt und wird von einem axial beweglichen Trennkolben 43 von einem druckvorgespannten Gasraum 45 getrennt. Endseitig verschließt ein Deckel 46 den Gasraum, wobei dieser über das offene Ende des rohrförmigen Grundkörpers sehr leicht gefüllt werden kann.

Zwischen der Dämpfeinrichtung 37 und dem Ausgleichsraum 41 ist eine Drosselstelle 47 angeordnet. Die Fig. 1 umfasst zwei Ausführungsvarianten. Zum einen kann gemäß der oberen Schnitthälfte ein poröses Bauteil 49, z. B. aus einem Sinterwerkstoff eingesetzt werden. Wichtig ist, dass die Drosselstelle bei großen Durchflussgeschwindigkeiten eine große Dämpfkraft ausübt. Alternativ kann man auch eine zweite Trennwand 51 verwenden, in der die Drosselstelle 47 ausgeführt ist. Man kann einen Kanal 53 vorsehen, der von einer Scheibe 55 zumindest teilabgedeckt wird. Die Drosselstelle lässt sich durch eine Prägung auf der der Scheibe 55 zugewandten Seite oder einer Aussparung in der Scheibe umsetzen.

Funktional parallel zur Drosselstelle 47 kann noch ein Rückschlagventil 57 geschaltet sein, so dass die Drosselstelle richtungsabhängig wirksam ist.

Die beiden Trennwände 35; 51 sind jeweils als ein Ringkolben ausgeführt und bilden über eine Tragstange 59 eine vormontierbare Baueinheit. Die Tragstange wiederum ist mit einem zweiten Deckel 61 des Rotors fest verbunden, so dass über diesen Deckel sehr einfach die Füllung des Drehschwingungsdämpfers mit einem Dämpfmedium vorgenommen werden kann.

Bei einer Schwenkbewegung des Rotors 3 in Uhrzeigerrichtung verkleinert sich das Volumen der Arbeitsräume 19. Das dabei verdrängte Dämpfmedium wird über die Radialkanäle 27a; b; c in den Sammelraum 31 verdrängt und steht am Dämpfventil 39 der Dämpfeinrichtung 35 an. In Abhängigkeit des Druckniveaus öffnet das Dämpfventil 39 mehr oder weniger, wobei das Dämpfmedium aus dem Sammelraum 33 in die Arbeitsräume 21, deren Volumen sich zeitgleich vergrößert, fließen kann. Der Druck des Dämpfmediums im Sammelraum 33 liegt auch an der zweiten Trennwand 51 oder dem porösen Bauteil 49 an. Die Drosselstelle 47 ist jedoch nur für einen sehr kleinen Volumenstrom durchlässig, so dass zum Ausgleichsraum 41 ein deutliches Druckgefälle vorliegt, das wiederum von der Druckvorspannung des Gasraums 45 bestimmt wird.

Bei einer Schwenkbewegung des Rotors gegen den Uhrzeigersinn wird der Sammelraum 33 mit Dämpfmedium unter Druck gesetzt. Die zweite Trennwand mit der Drosselstelle 47 wirkt als Stütze für den an dem Dämpfventil 37 anstehenden Druck. Folglich ist die erreichbare Dämpfkraft am Dämpfventil 37 nicht mehr einzig von der Druckvorspannung im Gasraum 45 abhängig, sondern vom Druckgefälle der Drosselstelle 47 in Verbindung mit der Druckvorspannung im Gasraum 45, wobei die Drosselstelle den weitaus größten Einfluss ausübt.

Sollte sich der Drehschwingungsdämpfer abkühlen, so kann Dämpfmedium aus dem Ausgleichsraum 41 in Sammelraum 33 strömen und einen Volumenverkleinerung des Dämpfmediums kompensieren. Bei sehr rascher Abkühlung kann das Rückschlagventil 57 den Rückfluss deutlich beschleunigen, da die Drosselstelle 47 damit überbrückt wird.

## Patentansprüche

1. Drehschwingungsdämpfer (1), umfassend einen mit Rippen (13) ausgestatteten Stator (5) und einen flügelbesetzten Rotor (3), wobei der Stator (5) und der Rotor (3) mindestens zwei mit Dämpfmedium gefüllte Arbeitskammern (19; 21) bilden, die bei der Schwingungsbewegung gegensinnig ihr Volumen verändern, mindestens eine Dämpfeinrichtung (37; 39), die mit mindestens einem der Arbeitsräume (19; 21)verbunden ist, wobei der mit der Dämpfeinrichtung (37; 39) verbundene Arbeitsraum (19; 21) mindestens eine Strömungsverbindung (27a, 27b; 27c; 29a; 29b; 29c) zu der Dämpfeinrichtung (37; 39) aufweist, wobei die Dämpfeinrichtung (37; 39) einen Sammelraum (31; 33) aufweist, der über die Strömungsverbindungen (27a, 27b; 27c; 29a; 29b; 29c) mit jeder Arbeitskammer (19; 21) verbunden ist und der Sammelraum (31; 33) zweigeteilt ist, wobei jeder der Sammelräume (31; 33) alle Arbeitskammern (19; 21) einer Drehrichtung verbindet und die beiden Einzelsammelräume (31; 33) durch eine Trennwand (35) separiert sind, in der die Dämpfeinrichtung (37; 39) angeordnet ist, wobei mindestens einer der Sammelräume (31; 33) mit einem druckvorgespannten Ausgleichsraum (45) in Wirkverbindung steht,
**dadurch gekennzeichnet,**
**dass** zwischen der Dämpfeinrichtung (37; 39) und dem Ausgleichsraum (41) eine Drosselstelle (47) angeordnet ist, wobei zwischen dem Ausgleichsraum (41) und der Dämpfeinrichtung (37; 39) eine die Drosselstelle (47) haltende zweite Trennwand verläuft.

2. Drehschwingungsdämpfer nach Anspruch 1,
**dadurch gekennzeichnet,**
**dass** die Drosselstelle (47) tendenziell eine große Drosselwirkung bei größeren Durchflussgeschwindigkeiten ausübt.

3. Drehschwingungsdämpfer nach Anspruch 1,
**dadurch gekennzeichnet,**
**dass** die Drosselstelle (47) richtungsabhängig wirksam ist.

4. Drehschwingungsdämpfer nach Anspruch 3,
**dadurch gekennzeichnet,**
**dass** der Drosselstelle (47) ein Rückschlagventil (57) parallel geschaltet ist, das bei einer Anströmung aus dem Sammelraum (33) geschlossen ist.

5. Drehschwingungsdämpfer nach Anspruch 1,
**dadurch gekennzeichnet,**
**dass** die Drosselstelle (47) von einem porösen Bauteil (49) gebildet wird.

6. Drehschwingungsdämpfer nach Anspruch 5,
**dadurch gekennzeichnet,**
**dass** das poröse Bauteil (49) aus einem Sinterwerkstoff besteht.

7. Drehschwingungsdämpfer nach Anspruch 1,
**dadurch gekennzeichnet,**
**dass** der Ausgleichsraum (41) auf derselben Mittelachse angeordnet ist wie der Sammelraum (31; 33).

8. Drehschwingungsdämpfer nach Anspruch 6,
**dadurch gekennzeichnet,**
**dass** die Dämpfeinrichtung (37; 39) und die zweite Trennwand (51) als Ringkolben ausgeführt sind und über eine Tragstange (59) eine Baueinheit bilden.

## Claims

1. Torsional vibration damper (1), comprising a stator (5) which is equipped with fins (13) and a rotor (3) which is fitted with vanes, the stator (5) and the rotor (3) forming at least two working chambers (19; 21) which are filled with damping medium and change their volume in opposite directions during the vibration movement; at least one damping device (37; 39) which is connected to at least one of the working spaces (19; 21), the working space (19; 21) which is connected to the damping device (37; 39) having at least one flow connection (27a, 27b; 27c; 29a; 29b; 29c) to the damping device (37; 39), the damping device (37; 39) having a collecting space (31; 33) which is connected to each working chamber (19; 21) via the flow connections (27a, 27b; 27c; 29a; 29b; 29c) and the collecting space (31; 33) being divided in two, each of the collecting spaces (31; 33) connecting all the working chambers (19; 21) of one rotational direction and the two individual collecting spaces (31; 33) being separated by a dividing wall (35), in which the damping device (37; 39) is arranged, at least one of the collecting spaces (31; 33) being operatively connected to an equalization space (45) which is prestressed with pressure, **characterized in that** a throttle point (47) is arranged between the damping device (37; 39) and the equalization space (41), a second dividing wall which holds the throttle point (47) extending between the equalization space (41) and the damping device (37; 39).

2. Torsional vibration damper according to Claim 1, **characterized in that** the throttle point (47) tends to exert a great throttling action at relatively high throughflow speeds.

3. Torsional vibration damper according to Claim 1, **characterized in that** the throttle point (47) is active in a direction-dependent manner.

4. Torsional vibration damper according to Claim 3, **characterized in that** a non-return valve (57) which is closed in the event of a flow to it out of the collecting space (33) is connected in parallel with the throttle point (47).

5. Torsional vibration damper according to Claim 1, **characterized in that** the throttle point (47) is formed by a porous component (49).

6. Torsional vibration damper according to Claim 5, **characterized in that** the porous component (49) is composed of a sintered material.

7. Torsional vibration damper according to Claim 1, **characterized in that** the equalization space (41) is arranged on the same centre axis as the collecting space (31; 33).

8. Torsional vibration damper according to Claim 6, **characterized in that** the damping device (37; 39) and the second dividing wall (51) are configured as annular pistons and form one structural unit via a carrying rod (59).

## Revendications

1. Amortisseur de vibrations torsionnelles (1), comprenant un stator (5) muni de nervures (13) et un rotor équipé d'aubes (3), le stator (5) et le rotor (3) formant au moins deux chambres de travail (19 ; 21) remplies de fluide amortisseur, dont les volumes varient en sens contraire lors du mouvement de vibration, au moins un dispositif d'amortissement (37 ; 39), qui est connecté à au moins l'une des chambres de travail (19 ; 21), la chambre de travail (19 ; 21) connectée au dispositif d'amortissement (37 ; 39) présentant au moins une connexion fluidique (27a, 27b ; 27c ; 29a ; 29b ; 29c) avec le dispositif d'amortissement (37 ; 39), le dispositif d'amortissement (37 ; 39) présentant une chambre collectrice (31 ; 33) qui est connectée par le biais des connexions fluidiques (27a, 27b ; 27c ; 29a ; 29b ; 29c) à chaque chambre de travail (19 ; 21) et la chambre collectrice (31 ; 33) étant partagée en deux, chacune des chambres collectrices (31 ; 33) reliant toutes les chambres de travail (19 ; 21) d'un sens de rotation, et les deux chambres collectrices individuelles (31 ; 33) étant séparées par une paroi de séparation (35), dans laquelle le dispositif d'amortissement (37 ; 39) est disposé, au moins l'une des chambres collectrices (31 ; 33) étant en liaison fonctionnelle avec une chambre de compensation (45) précontrainte par pression,
**caractérisé en ce**
**qu'**un étranglement (47) est disposé entre le dispositif d'amortissement (37 ; 39) et la chambre de compensation (41), une deuxième paroi de séparation retenant l'étranglement (47) s'étendant entre la chambre de compensation (41) et le dispositif d'amortissement (37 ; 39).

2. Amortisseur de vibrations torsionnelles selon la revendication 1,
**caractérisé en ce que**
l'étranglement (47) a tendance à exercer un gros effet d'étranglement pour des vitesses de flux croissantes.

3. Amortisseur de vibrations torsionnelles selon la revendication 1,
**caractérisé en ce que**
l'étranglement (47) agit en fonction du sens.

4. Amortisseur de vibrations torsionnelles selon la revendication 3,
**caractérisé en ce que**
l'étranglement (47) est monté en parallèle avec un clapet anti-retour (57) qui est fermé dans le cas d'un afflux hors de la chambre collectrice (33).

5. Amortisseur de vibrations torsionnelles selon la revendication 1,
**caractérisé en ce que**
l'étranglement (47) est formé par un composant poreux (49).

6. Amortisseur de vibrations torsionnelles selon la revendication 5,
**caractérisé en ce que**
le composant poreux (49) se compose d'un matériau fritté.

7. Amortisseur de vibrations torsionnelles selon la revendication 1,
**caractérisé en ce que**
la chambre de compensation (41) est disposée sur le même axe médian que la chambre collectrice (31 ; 33).

8. Amortisseur de vibrations torsionnelles selon la revendication 6,
**caractérisé en ce que**
le dispositif d'amortissement (37 ; 39) et la deuxième paroi de séparation (51) sont réalisées sous forme de piston annulaire et forment par le biais d'une tige porteuse (59) une unité constructive.
